**Europäisches Patentamt**

**European Patent Office**

**Office européen des brevets**

(19)

(11) **EP 1 315 075 A2**

(12) **EUROPEAN PATENT APPLICATION**

| | |
|---|---|
| (43) Date of publication:<br>**28.05.2003 Bulletin 2003/22** | (51) Int Cl.⁷: **G06F 3/12** |

(21) Application number: **02026330.7**

(22) Date of filing: **21.11.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI** | (72) Inventors:<br>• **Hideki, Akiyama, Riso Kagaku Cor., R&D Center<br>Inashiki-gun, Ibaraki-ken (JP)**<br>• **Noboru, Inamine, Riso Kagaku Cor., R&D Center<br>Inashiki-gun, Ibaraki-ken (JP)** |
| (30) Priority: **22.11.2001 JP 2001357979** | (74) Representative: **Klunker . Schmitt-Nilson . Hirsch<br>Winzererstrasse 106<br>80797 München (DE)** |
| (71) Applicant: **RISO KAGAKU CORPORATION<br>Tokyo (JP)** | |

(54) **Printing engine control system and printing engine control program**

(57)    A plurality of printing engines are installed in a single printer and a printing engine control system is installed in the printer to control the printing engines. The printing engine control system selects one of the printing engines on the basis of the kind of the printer language of print data sent to the printer.

**EP 1 315 075 A2**

Printed by Jouve, 75001 PARIS (FR)

**Description**

BACKGROUND OF THE INVENTION

Field of the Invention

This invention relates to a printing engine control system and a printing engine control program, and more particularly to a system and a program for controlling a plurality of printing engines built in a single printer.

Description of the Related Art

When printing a file created by an application software or the like by the use of, for instance, a printer, it is necessary that the file is rewritten, by a printer driver installed in the computer, into print data readable to a print control system installed in the printer. Then the print control system decodes the print data into image data readable to a printing engine of the printer and the image data is sent to the printing engine of the printer.
The file made by the application software or the like is converted into print data in a printer language readable to the print control system together with print setting information, such as on resolution, the size of printing paper, and the number of copies to be printed, by the printer driver installed in the computer. The printing engine can deal with only specific resolutions and understand only a specific printer language, and accordingly, the print control system as well as the printer driver is usually in one-to-one correspondence with the printing engine.
As the printer, there are various types of printers such as a laser beam printer, an ink jet printer, a dot printer, a ribbon printer, a stencil printer and the like which are driven by printing engines of different systems. For example, the printing engine for the stencil printer makes a stencil according to the image data (print data) with a thermal head for each page of print data and transfers ink to printing papers through the stencil, thereby printing each page of print data on printing papers. Whereas, in printers other than the stencil printer, no stencil is used. For example, in the case of a laser beam printer, the printing engine causes a photosensitive drum to be imagewise exposed to a laser beam according to each page of the image data (print data), thereafter causes toner to adhere to the exposed part of the photosensitive drum, and transfers the toner of the photosensitive drum to a printing paper.
Since the printing engines for different types of printers differ from each other in printing system, the time and/or cost required to output one copy greatly differs from each other depending on the type of the printer.
The following table 1 shows the time and cost required to output one copy in the case of a stencil printer (SP) versus the time and cost required to output one copy in the case of a laser beam printer (LBP) when the stencil printer and the LBP outputs output the same copies.

Table 1

| number of copies / printer | output time/one copy | | cost/one copy | |
|---|---|---|---|---|
| | SP | LBP | SP | LBP |
| 1 | 60.0[s] | 5.0[s] | ¥160 | ¥10 |
| 20 | 3.6[s] | 5.0[s] | ¥8 | ¥10 |
| 100 | 1.2[s] | 5.0[s] | ¥7 | ¥10 |
| 500 | 0.7[s] | 5.0[s] | ¥6 | ¥10 |
| 1000 | 0.7[s] | 5.0[s] | ¥5 | ¥10 |
| 3000 | 0.6[s] | 5.0[s] | ¥4 | ¥10 |

As can be understood from table 1, in the case of the stencil printer, the output time per one copy is shortened as the total number copies to be printed increases and the cost per one copy is reduced as the total number copies to be printed increases since it is necessary to make a stencil irrespective of the number of copies to be printed. On the other hand, in the case of the laser beam printer, the output time per one copy and the cost per one copy are both constant irrespective of the number of copies to be printed. Accordingly, the stencil printer is advantageous over the laser beam printer (or other printers) when the total number of copies to be printed (of the same contents) is large whereas the laser beam printer (or other printers) is advantageous over the stencil printer when the total number of copies to be printed (of the same contents) is small.

This causes a demand for a system in which an optimal printing system can be selected from the viewpoint of both the output time and the cost. For example, it is preferable if a stencil printer can be selected when a relatively large number of same copies are to be printed and a printer other than a stencil printer can be selected when a relatively small number of same copies are to be printed.

However, since it is difficult to install a plurality of printers of different printing systems in an office whose space is limited, there is a demand that a single printer can deal with a plurality of different printing systems. In order to meet with this demand, it is necessary to provide a single printer with a plurality of printing engines and a print control system which can selectively control the printing engines.

It is often the case that common data (data of the same contents) is printed on a part of a large number of printing media and discrete data is printed on a different part of each printing medium. For example, when printing New Year's cards, the New Year's greetings and/or a picture are generally printed on the back of all the postcards as common data, and the address and the name of the destination is printed postcard by postcard on the front of the postcard as the discrete data. In such a case, it is advantageous to use a stencil printer to print the common data on the back of the postcards and to use a printer other than a stencil printer to print the discrete data on the front of the postcards. In order to realize this, conventionally it is necessary for the user to go to a pair of printers which differ from each other in printing system and to set the cards in place with respect to each printer. Further, the user usually must watch the printer printing the data to be printed first since if wrong data is printed on the side of the postcards, the postcards run to waste, which restrict the user in his or her movements during the printing.

Such a problem can be overcome by installing a single printer with a plurality of printing engines (e.g., a printing engine for stencil printing and a printing engine for ink jet printing) and providing a paper transfer mechanism between the printing engines. The printer having therein a plurality of printing engines requires a print control system which supervises the printing engines.

SUMMARY OF THE INVENTION

In view of the foregoing observations and description, the primary object of the present invention is to provide a printing engine control system which can supervise a plurality of printing engines installed in a printer.

Another object of the present invention is to provide a printing engine control program for supervising a plurality of printing engines installed in a printer.

In accordance with a first aspect of the present invention, there is provided a printing engine control system provided in a printer together with a plurality of printing engines to control the printing engines characterized by having a printing engine selecting means which selects one of the printing engines on the basis of the kind of the printer language of print data sent to the printer.

In accordance with a second aspect of the present invention, there is provided a printing engine control system provided in a printer together with a plurality of printing engines to control the printing engines characterized by having a printing engine selecting means which selects one of the printing engines on the basis of printing-engine-specifying information included in print data sent to the printer.

In the printing engine control systems in accordance with the first and second aspects of the present invention, the "print data" means data obtained by converting a file made by application software into data of format readable to the printing engine control system. The print data may include print setting information such as on the size of printing paper, and the number of copies to be printed in addition to the printing contents, i.e., the image data.

Further, the "printing-engine-specifying information" is information for specifying one of the printing engines installed in the printer and, for instance, a command included in the print data.

That is, in the printing engine control system in accordance with the first aspect of the present invention, the printing engine selecting means selects a printing engine on the basis of the printer language used in the print data which is generally in one-to-one correspondence with one printing engine, whereas, in the printing engine control system in accordance with the second aspect of the present invention, the printing engine selecting means selects a printing engine on the basis of the "printing-engine-specifying information" included in the print data.

The printing engine control system of the present invention is for selectively using one of a plurality of printing engines installed in a printer, and accordingly need not be provided with a function of decoding the print data into image data. For example, the function may be allotted to a print control system which is provided to each of the printing engines. However, in the case of the printing engine control system in accordance with the first aspect of the present invention, it is preferred that the printing engine control system be provided also with the function of decoding the print data into image data in order to improve the total efficiency of the printer since it must decode the print data to select one of the printing engines anyway. To the contrary, in the case of the printing engine control system in accordance with the second aspect of the present invention, the printing engine control system only has to decode a part of the print data corresponding to the printing-engine-specifying information, and accordingly the printing engine control system may be or need not be provided with the function of converting the print data into image data.

In the case where the printer is provided with a paper transfer mechanism which transfers printing papers on which a piece of print data have been printed by one of the printing engines to another printing engine and the print data includes print linking information representing whether another piece of print data is to be printed on the printing papers by a specified printing engine, it is preferred that the printer further comprises a print linking control means which, when a first piece of print data including print linking information representing that a second piece of print data is to be printed on the printing papers by a specified printing engine is input, causes the paper transfer mechanism to transfer printing papers which have been printed by the printing engine selected on the basis of the first piece of print data to the specified printing engine and when the second piece of print data is input, causes the specified printing engine to print the second piece of print data on the printing papers transferred to the specified printing engine.

The second piece of data may be identified, for instance, by identifying data including information representing that the data is to be linked with the first piece of print data as the second piece of data or by identifying data sent immediately after the first piece of print data as the second print data.

It is preferred that the paper transfer mechanism be provided with a paper reversing mechanism which turns over the printing paper, printing side designating information representing on which side of the printing paper the second piece of print data is to be printed, on the same side as or the opposite side to the first piece of print data be included in the first or second print data and the print linking control means further comprises a paper side control means which causes the paper transfer mechanism to transfer the printing paper to said specified printing engine with the printing paper reversed or not reversed so that the second piece of print data is printed on the side of the printing paper designated by the printing side designating information.

Further, it is preferred that the plurality of printing engines be all different from each other in printing system and it is especially preferred that one of the printing engines be a stencil printing engine since the printing engine control system of the present invention is for improving the printing process efficiency by selectively using one of a plurality of printing engines depending upon circumstances.

In accordance with a third aspect of the present invention, there is provided a printing engine control program for supervising a plurality of printing engines installed in a printer characterized by having a printing engine selecting procedure of selecting one of the printing engines on the basis of the kind of the printer language of print data sent to the printer.

In accordance with a fourth aspect of the present invention, there is provided a printing engine control program for supervising a plurality of printing engines installed in a printer characterized by having a printing engine selecting procedure of selecting one of the printing engines on the basis of printing-engine-specifying information included in print data sent to the printer.

In accordance with the present invention, a printer which has a plurality of printing engines and can deal with a plurality of different printing systems can be realized since the printing engine selecting means properly selects one of the printing engines according to the print data sent to the printer.

In the printing engine control system in accordance with the first aspect of the present invention, the printing engine selecting means selects a printing engine on the basis of the printer language used in the print data which is generally in one-to-one correspondence with one printing engine, and accordingly, it is not necessary for the data sending side to add additional instruction to the print data, which simplifies the operation of the data sending side. Further, since the printing engine control system decodes the print data when selecting a printing engine, the function of decoding the print data into image data readable to the selected printing engine can be easily added without complicating the total system and a print control system which is conventionally provided to each of the printing engines becomes unnecessary.

To the contrary, in the printing engine control system in accordance with the second aspect of the present invention, the printing engine selecting means selects a printing engine on the basis of the "printing-engine-specifying information" included in the print data, and accordingly, the printing engine control system may decode only the printing-engine-specifying information and need not decode the whole print data, which simplifies the structure of the printing engine control system.

When the printer is provided with a paper transfer mechanism, the print data includes print linking information representing whether another piece of print data is to be printed on the printing papers by a specified printing engine, and the printing engine control system further comprises a print linking control means, different pieces of data can be printed on one printing paper without necessity for the user to reset the printing papers or to watch the printer printing the data to be printed first, whereby the printing process can be done efficiently and useless printing due to user's mistake can be avoided.

Further when the paper transfer mechanism is provided with a paper reversing mechanism which turns over the printing paper and printing side designating information representing on which side of the printing paper the second piece of print data is to be printed, on the same side as or the opposite side to the first piece of print data is included in the first or second print data, a pair of pieces of print data can be printed on opposite sides of the printing paper in different printing systems by a single printer.

BRIEF DESCRIPTION OF THE DRAWINGS

Figure 1 is a view schematically showing a print system including a stencil/ribbon printer provided with a printing engine control system in accordance with an embodiment of the present invention,

Figure 2A is a view showing an example of a printer setting screen in a state where the stencil/ribbon printer is selected,

Figure 2B is a view showing an example of a printing side setting screen displayed when "Stencil printing (linked with Ribbon printing)" or "Ribbon printing (linked with Stencil printing)" is selected on the printer setting screen,

Figure 2C is a view showing a screen displayed after the printing side is set on the printing side setting screen,

Figure 3 is a block diagram showing the structure of the stencil/ribbon printer employed in the print system,

Figure 4 to 6 are a flow chart for illustrating the operation of the print system shown in Figure 1,

Figure 7A shows an example of the back side of New Year's cards, and

Figure 7B shows an example of the front side of New Year's cards.

DESCRIPTION OF THE PREFERRED EMBODIMENTS

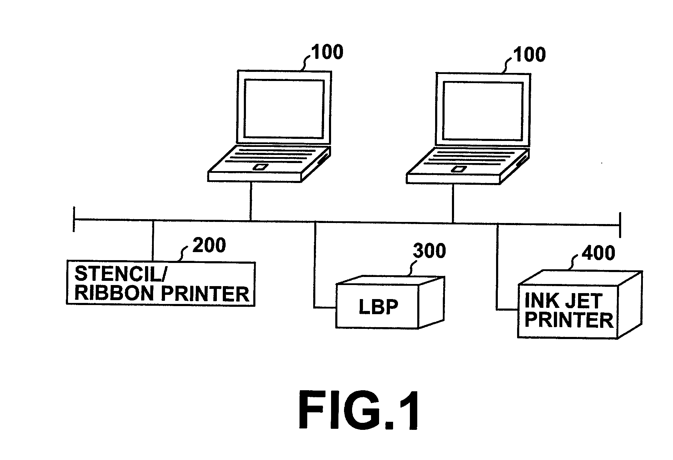

In Figure 1, a print system including a stencil/ribbon printer 200 provided with a printing engine control system in accordance with an embodiment of the present invention is connected to personal computers 100 by way of a network. A laser beam printer 300 and an ink jet printer 400 are further connected to the network. Printer drivers for the stencil/ribbon printer 200, the laser beam printer 300 and the ink jet printer 400 are installed in each of the computers 100. By designating one of the printer drivers on the computer side, data representing a file to be printed is converted into print data by the designated printer driver and is output to the corresponding printer. At this stage, to designate a printer is substantially the same as to designate a printer driver. That is, when the printer driver of the laser beam printer 300 is designated, data representing a file to be printed is converted by the printer driver for the laser beam printer 300 to print data in the form required by the print control system and the printing engine for the laser beam printer 300 and the print data is output to the laser beam printer 300. Similarly, when the ink jet printer 400 is designated, data representing a file to be printed is converted by the printer driver for the ink jet printer 400 to print data in the form required by the print control system and the printing engine for the ink jet printer 400 and the print data is output to the ink jet printer 400. Since the stencil/ribbon printer 200 is provided with both a printing engine for the stencil printing and a printer driver for the ribbon printing, which of the stencil printing and the ribbon printing is to be selected must be further designated on a printer driver setting screen.

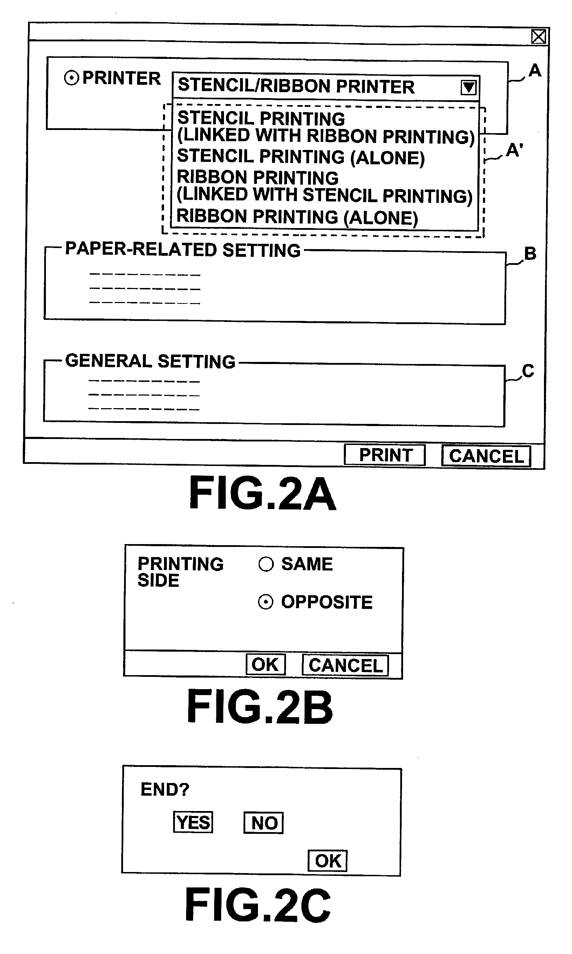

Figure 2A shows an example of a printer setting screen in a state where the stencil/ribbon printer 200 is selected, Figure 2B shows an example of a printing side setting screen displayed when "Stencil printing (linked with Ribbon printing) " or "Ribbon printing (linked with Stencil printing)" (to be described later) is selected on the printer setting screen, and Figure 2C shows a screen displayed after the printing side is set on the printing side setting screen.

On the printer setting screen, there are provided a printer selecting dialog box A for selecting one of the stencil/ribbon printer 200, the laser beam printer 300 and the ink jet printer 400, a paper-related setting dialog box B for setting items related to the printing paper such as the paper size, the paper direction and/or the paper supply tray, and a general setting dialog box C for setting other items such as the number of copies to be printed. Different paper-related setting dialog box B and general setting dialog box C are displayed according to the printer selected. When the stencil/ribbon printer 200 is selected in the printer selecting dialog box A, a printing engine selecting dialog box A' is displayed. In the printing engine selecting dialog box A', one of four options, "Stencil printing (linked with Ribbon printing)", "Stencil printing (alone)", "Ribbon printing (linked with Stencil printing)" and "Ribbon printing (alone)" is selected. For example, when "Stencil printing (linked with Ribbon printing)" is selected, the printer driver for the stencil/ribbon printer 200 converts the data representing a file to be printed to print data in a printer language readable to the stencil printing engine of the stencil/ribbon printer 200 and attaches the print data with print linking information representing that another piece of print data is to be printed on the printing paper by ribbon printing after the print data is printed thereon by stencil printing. Similarly, when "Ribbon printing (linked with Stencil printing)" is selected, the printer driver for the stencil/ribbon printer 200 converts the data representing a file to be printed to print data in a printer language readable to the ribbon printing engine of the stencil/ribbon printer 200 and attaches the print data with print linking information representing that another piece of print data is to be printed on the printing paper by stencil printing after the print data is printed thereon by ribbon printing. Further, when "Stencil printing (linked with Ribbon printing) " or "Ribbon printing (linked with Stencil printing) " is selected, the printing side setting dialog box shown in Figure 2B is displayed. This is for setting whether the second print data is to be printed on the same side as the first print data or the opposite side to the first print data. Then printing side designating information representing on which side of the printing paper the second piece of print data is to be printed is attached to the print linking information by the printer driver for the stencil/ ribbon printer 200. When "Stencil printing (linked with Ribbon printing)" or "Ribbon printing (linked with Stencil printing)" is selected, the print data is once stored in a memory of the computer allotted to the printer buffer.

When "Stencil printing (alone)" or "Ribbon printing (alone)" is selected, the printer driver for the stencil/ribbon printer 200 converts the data representing a file to be printed to print data in a printer language readable to the corresponding printing engine of the stencil/ribbon printer 200 and attaches the print data with print linking information representing that no additional piece of print data is to be printed on the printing paper.

When "Stencil printing (linked with Ribbon printing)" or "Ribbon printing (linked with Stencil printing)" is selected and setting of the first print data (the print data to be printed first by stencil printing or ribbon printing) is completed, setting of the second print data (the print data to be printed on the same printing paper after the first print data is printed) is performed on the computer side. That is, the application software by which the second data is generated is first started up and a piece of data is opened. When the application software issues a print instruction, the printer setting screen shown in Figure 2A is displayed. Then, when "Stencil printing (linked with Ribbon printing)" has been selected for the first print data, the data opened by the software application is set as the second data by selecting "Ribbon printing (linked with Stencil printing)". The printer driver for the stencil/ribbon printer 200 converts the second data to print data in a printer language readable to the ribbon printing engine of the stencil/ribbon printer 200, and stores the second print data in the printer buffer where the first print data has been stored. A plurality of pieces of data may be set as the second data, and the screen shown in Figure 2C is displayed each time a piece of second print data is set. This is repeated until "YES" is selected and "OK" button is pushed on the screen shown in Figure 2C. The plurality of pieces of data stored in the printer buffer are output to the stencil/ribbon printer 200.

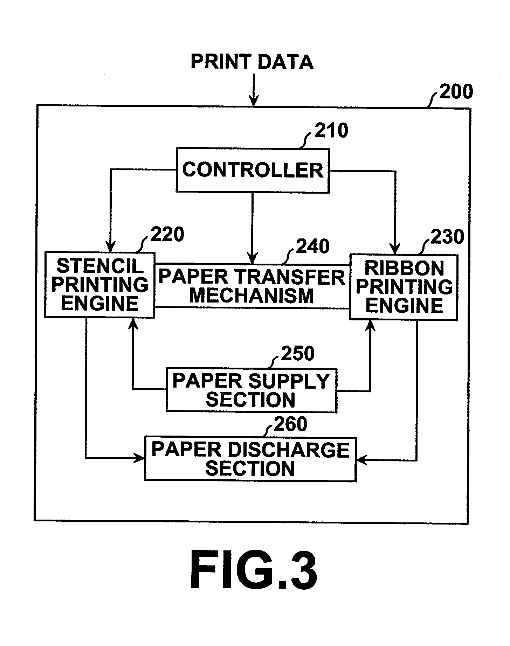

Figure 3 is a block diagram showing the structure of the stencil/ribbon printer 200 employed in the print system shown in Figure 1.

In Figure 3, the stencil/ribbon printer 200 comprises a controller (a printing engine control system in accordance with an embodiment of the present invention) 210, a stencil printing engine 220, a ribbon printing engine 230, a paper transfer mechanism 240 with a paper reversing mechanism which transfers the printing paper from one of the stencil printing engine 220 and the ribbon printing engine 230 to the other, a paper supply section 250 which supplies virgin printing papers to the stencil printing engine 220 and the ribbon printing engine 230, and a paper discharge section 260 which stores printing papers discharged from the stencil printing engine 220 and the ribbon printing engine 230. The controller 210 decodes print data sent from the computer 100, more strictly, from the printer driver for the stencil/ribbon printer 200 installed in the computer 100. When the print data is in the printer language corresponding to the stencil printing engine 220, the controller 210 converts the print data into image data readable to the stencil printing engine 220 and outputs the image data to the stencil printing engine 220, whereas when the print data is in the printer language corresponding to the ribbon printing engine 230, the controller 210 converts the print data into image data readable to the ribbon printing engine 230 and outputs the image data to the ribbon printing engine 230. Further, the controller 210 decodes the print linking information included in the print data and controls transfer of the printing paper on the basis of the print linking information.

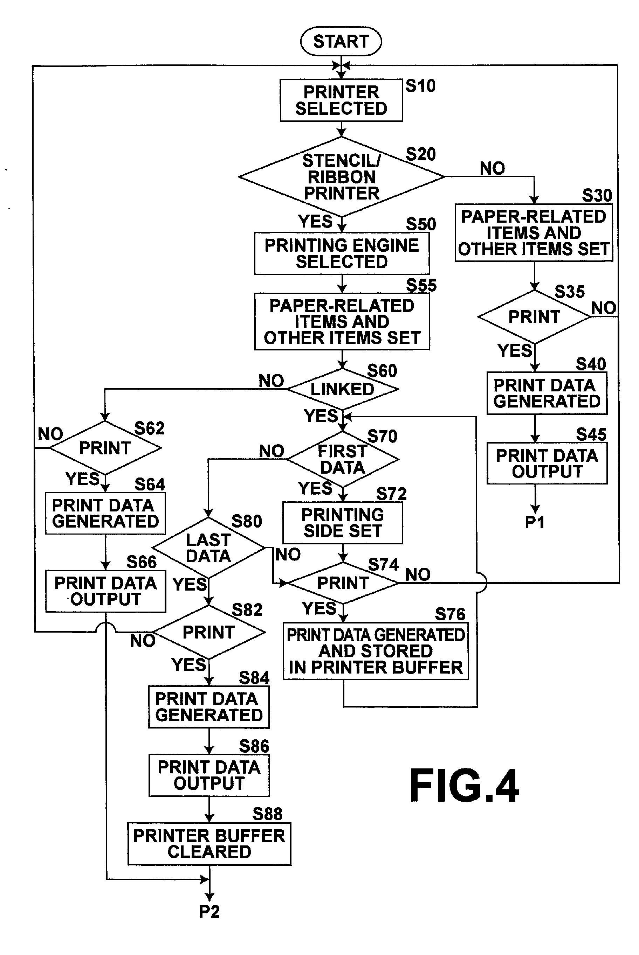

Operation of the print system shown in Figure 1 will be described in detail with reference to the flow chart shown in Figures 4 to 6, hereinbelow.

Figure 4 shows a part of the flow chart for illustrating the procedure of printer selection on the computer 100 side and the flow chart of the operation of the selected printer. When the user starts up the application software and the application software issues a print instruction, printing action of the print system shown in Figure 1 is started.

The user selects a printer by the printer setting screen shown in Figure 2A. (step S10) When the laser beam printer 300 or the ink jet printer 400 is selected, the printer driver for the corresponding printer shows to the user a paper-related setting screen for setting items related to the printing paper such as the paper size and/or the paper direction and a general setting screen for setting other items and the user sets these items by the screens. (steps S20 and S30) When "Print" button shown in Figure 2A is clicked (that is "Print" button is clicked will be referred to as "print instruction is issued", hereinbelow) after the setting, the file to be printed is converted into print data and the print data is output to the selected printer (the laser beam printer 300 or the ink jet printer 400). (steps S35, S40 and S45)

Whereas, when the stencil/ribbon printer 200 is selected in step S10, the printer driver for the stencil/ribbon printer 200 shows a printing engine selecting dialog box A' shown in Figure 2A to allow the user to select one of the stencil printing engine or the ribbon printing engine and shows a paper-related setting dialog box B and a general setting dialog box C to allow the user to set these items. (steps S20, S50 and S55) When "Stencil printing (alone)", or "Ribbon printing (alone)" is selected and print instruction is issued, the printer driver for the stencil/ribbon printer 200 converts the file to be printed to print data in a printer language conforming to the selected printer engine (the stencil printing engine 220 or the ribbon printing engine 230) and outputs the print data to the stencil/ribbon printer 200 with print linking information representing that no additional piece of print data is to be printed on the printing paper attached to the print data. (steps S60, S62, S64 and S66)

When "Stencil printing (linked with Ribbon printing)", or "Ribbon printing (linked with Stencil printing)" is selected in step S60, the printer driver for the stencil/ribbon printer 200 searches the printer buffer of the computer 100 and determines whether the data currently involved in setting is a piece of second data to be printed on the same printing paper after a first piece of data is printed on the printing paper. (step S70) For example, when "Stencil printing (linked with Ribbon printing)" is selected for the data currently involved in setting, and when there is a piece of data having print linking information, "Ribbon printing (linked with Stencil printing)", the data currently involved in setting is second data whereas when there is no piece of data having print linking information, "Ribbon printing (linked with Stencil printing)", the data currently involved in setting is first data.

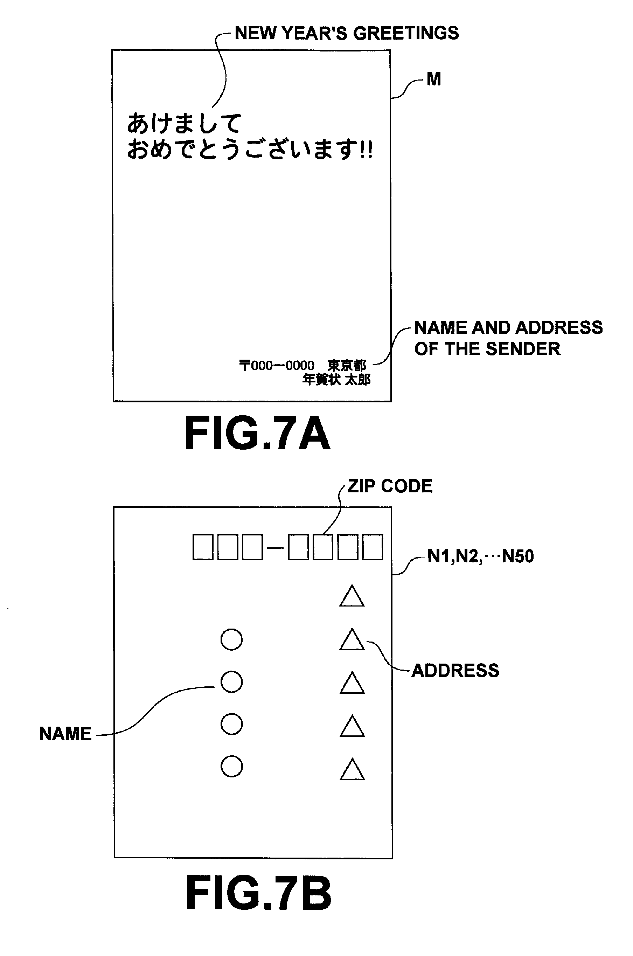

When it is determined in step S70 that the data currently involved in setting is first data, the printer driver for the stencil/ribbon printer 200 shows the printing side setting screen shown in Figure 2B to the user and the user sets the printing side. (step S72) For the purpose of simplicity, it is assumed here that the user intends to print fifty New Year's cards with the New Year's greetings and the name and address of the sender printed on the back of all the postcards as shown in Figure 7A and with the address and the name of the destination printed postcard by postcard on the front of the postcard as shown in Figure 7B. The New Year's greetings and the name and address of the sender to be printed on the back of all the postcards are common data to be printed on all the postcards and will be referred to as "common data M", and the address and the name of the destination to be printed on the front of the postcard differ postcard to postcard and will be referred to as "discrete data N1, N2, ····· N50".

In this case, the user selects "Stencil printing (linked with Ribbon printing)" for the common data M in step S50, sets the number of copies to fifty in step S55 and sets the printing side to "opposite" in step S72. When "print instruction is issued" (step S74: YES), the printer driver for the stencil/ribbon printer 200 attaches the print data with the print linking information representing that the first data is to be printed by stencil printing and the second data is to be printed by ribbon printing ("Stencil printing (linked with Ribbon printing)") and that the second data is to be printed on the side opposite to the first data ("opposite"). The print data with the print linking information is once stored in the printer buffer. (step S76)

After setting for the common data or the first data M is ended, the user is allowed to effect printing action on second data or other data. Here printing action on the second data N1 will be described by way of example. Assuming that the user has opened the data N1, the application software has issued print instruction, steps S10 to S55 have been executed, and "Ribbon printing (linked with Stencil printing)" is selected in step S50, the printer driver for the stencil/ribbon printer 200 determines that data N1 is a piece of second data since in this case, there is a piece of data having print linking information, "Stencil printing (linked with Ribbon printing)". That is, answer to the question in step S70 is NO in this case. Then the printer driver for the stencil/ribbon printer 200 shows the screen shown in Figure 2C to the user for the data N1 determined to be a piece of second data and the user sets whether the data N1 is the last piece of data to be printed linked with the first data M. (step S80) In this case, the user sets in step S70 that the data N1 is not the last piece of data to be printed linked with the first data M and when print instruction is issued (step S74), the printer driver for the stencil/ribbon printer 200 converts the data N1 to print data in a printer language conforming to the ribbon printing engine 230 and stores the print data in the printer buffer. (step S76) In the similar manner, the pieces of data N2 to N49 are stored in the printer buffer in the form of a plurality of pieces of print data.

The data N50 is set in step S80 to be the last piece of data to be printed linked with the first data M and when print instruction is issued (step S82), the printer driver for the stencil/ribbon printer 200 converts the data N50 to print data in a printer language conforming to the ribbon printing engine 230 and outputs to the stencil/ribbon printer 200 in sequence the print data converted from the data N50 together with the pieces of print data stored in the printer buffer (the first data M and the pieces of print data converted from the pieces of second data N1 to N49). (steps S84 and S86) Thereafter the printer driver clears the printer buffer. (step S88)

The pieces of second data N1, N2, ····· N50 are set in step S55 to be one in number of copies.

Print setting operation and action of the printer drivers on the computer 100 side have been described above. Action on the printer side upon receipt of the print data will be described, hereinbelow.

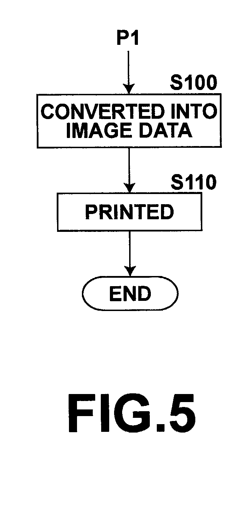

First, action of the laser beam printer 300 and the ink jet printer 400 will be described with reference to Figure 5. As shown in Figure 5, when the laser beam printer 300 receives print data from the printer driver for the laser beam printer 300, the controller of the laser beam printer 300 converts the print data into image data and outputs the image data to the printing engine of the laser beam printer 300. (step S100) When receiving the image data, the printing engine of the laser beam printer 300 prints the image data. (step S110) Similarly, when the ink jet printer 400 receives print data from the printer driver for the ink jet printer 400, the controller of the ink jet printer 400 converts the print data into image data and outputs the image data to the printing engine of the ink jet printer 400. (step S100) When receiving the image data, the printing engine of the ink jet printer 400 prints the image data. (step S110)

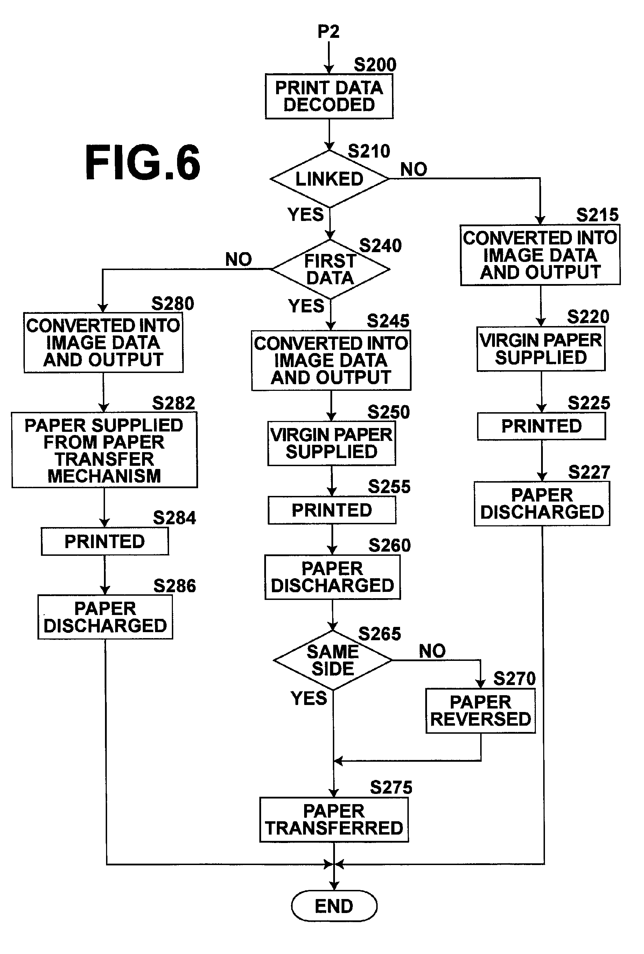

As shown in Figure 6, when the stencil/ribbon printer 200 receives print data from the printer driver for the stencil/ribbon printer 200, the controller 210 (a printing engine control system in accordance with an embodiment of the present invention) decodes the print data and determines the kind of the printer language in which the print data is expressed. At the same time the controller 210 obtains print linking information included in the print data. (step S200) When the print linking information obtained represents "alone", the controller 210 selects one of the stencil printing engine 220 and the ribbon printer engine 230 according to the kind of the printer language in which the print data is expressed, and converts the print data into image data in a printer language conforming to the selected printing engine, and then outputs the image data to the selected printing engine . (steps S210 and S215) At the same time, the controller 210 causes the paper supply section 250 to supply a virgin printing paper and causes the printing engine to print the image data. (steps S220 and S225) The printed papers are discharged to the paper discharge section 260 and are stocked there. (step S227)

Whereas, when it is determined in step S210 that the print linking information obtained represents "Stencil printing (linked with Ribbon printing)" or "Ribbon printing (linked with Stencil printing) ", the controller 210 determines whether the print data comes from first data. (step S240) For the purpose of simplicity, it is assumed here that the user intends to print fifty New Year's cards shown in Figures 7A and 7B. Further, print data converted from the "common data M" will be referred to as the "common print data M'" or "first print data M'", and print data converted from the "discrete data N1, N2, ····· N50" will be referred to as the "discrete print data N1', N2', ····· N50'" or "second print data N1', N2', ····· N50'", hereinbelow.

The controller 210 receives the print data M', and pieces of print data N1', N2', ····· N50' in sequence. When receiving the print data M', the controller 210 selects the stencil printing engine 220 as the printing engine for printing the print data M' on the basis of the printer language in which the print data M' is expressed and determines that the print data M' is the first data on the basis of the print linking information attached to the pint data M'. (steps S200, S210 and S240) The controller 210 converts the print data M' into image data in a printer language conforming to the stencil printing engine 220, and then outputs the image data to the stencil printing engine 220. At the same time, the controller 210 causes the paper supply section 250 to supply a virgin printing paper to the stencil printing engine 220 and causes the stencil printing engine 220 to make a stencil and to print the image data in a predetermined number of copies (fifty in this particular example). (steps S245, S250 and S255) Further, the controller 210 causes the stencil printing engine 220 to discharge the printing papers on which the first print data M' is printed to the paper transfer mechanism 240. (step S260) Further, since the print linking information indicates that the second print data is to be printed on the side of the printing paper opposite to the first print data, the controller 210 causes the paper reversing mechanism of the paper transfer mechanism 240 to turn over the printing paper and then causes the paper transfer mechanism 240 to transfer the reversed printing paper to the ribbon printing engine 230. (steps S265, S270 and S275)

The stencil/ribbon printer 200 receives a piece of print data N1' after the first print data M'. The controller 240 determines that the print data N1' is a piece of second data on the basis of the fact that the print data N1' is not a leader of pieces of print data which are sent in a group, and converts the print data N1' into image data in a printer language conforming to the ribbon printing engine 230 determined in step S200, and then outputs the image data to the ribbon printing engine 230. (steps S240 and S280) At the same time, the controller 210 causes the paper transfer mechanism 240 to supply first one of the printing papers, on which the first print data M' has been printed, in a reversed state and causes the ribbon printing engine 230 to print the image data converted from the print data N1. (steps S282 and S284) The printing paper printed with data M' and N1' on opposite sides thereof is discharged to the paper discharge section 260 and is stocked there. (step S286)

Though, in this embodiment, the printing paper is transferred to the ribbon printing engine 230 which prints the second print data N' (pieces of print data N1' to N50') each time printing of the first data M' on the printing paper is completed, a predetermined number of printing papers which have been printed with the first print data M' may be once stocked in a stock means provided between the stencil printing engine 220 and the paper transfer mechanism 240 or between the ribbon printing engine 230 and the paper transfer mechanism 240 and then transferred to the ribbon printing engine 230.

The stencil/ribbon printer 200 further receives the other pieces of second print data N2', ····· N50' in sequence, and processes them in the same manner as the print data N1'.

Since activating one of the printing engines in the stencil/ribbon printer 200 selected on the basis of the printer language used in the print data sent from the printer driver for the stencil/ribbon printer 200, the controller 210 can control a plurality of printing engines built in a single printer, whereby a printer which can conform to a plurality of different printing systems can be realized.

Further, since the controller 210 controls the paper transfer mechanism 240 on the basis of the print linking information sent thereto together with the print data to cause the paper transfer mechanism 240 to transfer the printing paper printed with first data by one of the stencil printing engine 220 and the ribbon printing engine 230 to the other printing engine for printing second data, different pieces of data can be printed on one printing paper without necessity for the user to reset the printing papers or to watch the printer printing the data to be printed first, whereby the printing process can be done efficiently and useless printing due to user's mistake can be avoided.

Further since the paper transfer mechanism 240 is provided with a paper reversing mechanism which turns over the printing paper, the position of the printing paper printed with first data by one of the stencil printing engine 220 and the ribbon printing engine 230 in which it is transferred to the other printing engine for printing second data can be controlled and accordingly, different pieces of print data can be printed either on the same side or on opposite sides of the printing paper by different printing engines.

Though, in the embodiment described above, the controller 210 selects one of the stencil printing engine 220 and the ribbon printing engine 230 on the basis of the printer language used in the print data, and accordingly, it is not necessary for the computer side, i.e., the printer driver side, to add additional instruction to the print data, whereby load on the printer driver can be lightened. However, it is possible to arrange the system so that the controller 201 selects one of the stencil printing engine 220 and the ribbon printing engine 230 on the basis of the "printing-engine-specifying information" included in the print data. In this case, the controller 201 may decode only the printing-engine-specifying information and need not decode the whole print data, whereby the composition of the controller 201 can be more simple.

Though a preferred embodiment of the present invention has been described above, the printing engine control system of the present invention need not be limited to the embodiment described above, but may be variously modified.

For example, though the controller 210 of the embodiment described above decodes the print data sent thereto to select one of the stencil printing engine 220 and the ribbon printing engine 230 on the basis of the printer language in which the print data is expressed and at the same time converts the print data into image data conforming to the selected printing engine, it is possible to arrange the system so that the controller 210 (a printing engine control system in accordance with an embodiment of the present invention) effects only selection of the printing engine and control of the paper transfer mechanism while the print data is converted to the image data by a controller provided to each of the printing engines.

Further, though, in the print system shown in Figure 1, the print linking information is attached to the first print data and is once stored together with the second print data in a printer buffer provided on the computer side, load on the computer can be lightened by providing a printer buffer on the printer side and the first print data and the second print data are stored in the printer buffer provided on the printer side.

Further, though, in the embodiment described above, the paper transfer mechanism is controlled on the basis of the printing side designating information attached to the print linking information of the first print data, the system may be arranged so that the paper transfer mechanism is controlled on the basis of the printing side designating information attached to the print linking information of the second print data.

Further, though in the embodiment described above, a single printer driver is provided for the stencil/ribbon printer 200 having a stencil printing engine 220 and a ribbon printing engine 230, a printer driver may be provided for each of the stencil printing engine 220 and the ribbon printing engine 230 so that print data conforming to each of the stencil printing engine 220 and the ribbon printing engine 230 is output from each printer driver.

Further, though, in the embodiment described, the controller 201 controls only a pair of printing engines built in a single printer, i.e., a stencil printing engine and a ribbon printing engine, the printing engine control system of the present invention may be arranged to control three or more printing engines built in a single printer. At the same time, the printing engines to be controlled by the printing engine control system may be of any combination of a stencil printing engine, a laser beam printing engine, a ribbon printing engine, an ink jet printing engine and the like depending upon the circumstances.

A computer program for causing a printer to perform the method of the present invention may be recorded in a computer readable medium so that the printer can perform the method when loaded with the recording medium. A skilled engineer would know that the computer readable medium is not limited to any specific type of storage devices and includes any kind of device, including but not limited to CDs, floppy disks, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including high-level languages, assembly language and machine language.

**Claims**

**1.** A printing engine control system provided in a printer together with a plurality of printing engines to control the printing engines **characterized by** having

a printing engine selecting means which selects one of the printing engines on the basis of the kind of the printer language of print data sent to the printer.

2. A printing engine control system as defined in Claim 1 in which the printer is provided with a paper transfer mechanism which transfers printing papers on which a piece of print data have been printed by one of the printing engines to another printing engine, the print data includes print linking information representing whether another piece of print data is to be printed on the printing papers by a specified printing engine, and the printer further comprises a print linking control means which, when a first piece of print data including print linking information representing that a second piece of print data is to be printed on the printing papers by a specified printing engine is input, causes the paper transfer mechanism to transfer printing papers which have been printed by the printing engine selected on the basis of the first piece of print data to the specified printing engine and when the second piece of print data is input, causes the specified printing engine to print the second piece of print data on the printing papers transferred to the specified printing engine.

3. A printing engine control system as defined in Claim 2 in which the paper transfer mechanism is provided with a paper reversing mechanism which turns over the printing paper, printing side designating information representing on which side of the printing paper the second piece of print data is to be printed, on the same side as or the opposite side to the first piece of print data is included in the first or second print data and the print linking control means further comprises a paper side control means which causes the paper transfer mechanism to transfer the printing paper to said specified printing engine with the printing paper reversed or not reversed so that the second piece of print data is printed on the side of the printing paper designated by the printing side designating information.

4. A printing engine control system as defined in Claim 1 in which one of the printing engines is a stencil printing engine.

5. A printing engine control system provided in a printer together with a plurality of printing engines to control the printing engines **characterized by** having

a printing engine selecting means which selects one of the printing engines on the basis of printing-engine-specifying information included in print data sent to the printer.

6. A printing engine control system as defined in Claim 5 in which the printer is provided with a paper transfer mechanism which transfers printing papers on which a piece of print data have been printed by one of the printing engines to another printing engine, the print data includes print linking information representing whether another piece of print data is to be printed on the printing papers by a specified printing engine, and the printer further comprises a print linking control means which, when a first piece of print data including print linking information representing that a second piece of print data is to be printed on the printing papers by a specified printing engine is input, causes the paper transfer mechanism to transfer printing papers which have been printed by the printing engine selected on the basis of the first piece of print data to the specified printing engine and when the second piece of print data is input, causes the specified printing engine to print the second piece of print data on the printing papers transferred to the specified printing engine.

7. A printing engine control system as defined in Claim 6 in which the paper transfer mechanism is provided with a paper reversing mechanism which turns over the printing paper, printing side designating information representing on which side of the printing paper the second piece of print data is to be printed, on the same side as or the opposite side to the first piece of print data is included in the first or second print data and the print linking control means further comprises a paper side control means which causes the paper transfer mechanism to transfer the printing paper to said specified printing engine with the printing paper reversed or not reversed so that the second piece of print data is printed on the side of the printing paper designated by the printing side designating information.

8. A printing engine control system as defined in Claim 5 in which one of the printing engines is a stencil printing engine.

9. A printing engine control program for supervising a plurality of printing engines installed in a printer **characterized by** having

a printing engine selecting procedure of selecting one of the printing engines on the basis of the kind of the printer language of print data sent to the printer.

**10.** A printing engine control program for supervising a plurality of printing engines installed in a printer **characterized by** having

a printing engine selecting procedure of selecting one of the printing engines on the basis of printing-engine-specifying information included in print data sent to the printer.

**11.** A computer readable media on which a printing engine control program defined in Claim 9 is recorded.

**12.** A computer readable media on which a printing engine control program defined in Claim 10 is recorded.

FIG.1

⊙ **PRINTER**  **STENCIL/RIBBON PRINTER** ▼ — A

**STENCIL PRINTING
(LINKED WITH RIBBON PRINTING)**
**STENCIL PRINTING (ALONE)** — A'
**RIBBON PRINTING
(LINKED WITH STENCIL PRINTING)**
**RIBBON PRINTING (ALONE)**

**PAPER-RELATED SETTING** — B

- — — — — — —
- — — — — — —
- — — — — — —

**GENERAL SETTING** — C

- — — — — — —
- — — — — — —
- — — — — — —

[PRINT]  [CANCEL]

# FIG.2A

**PRINTING SIDE**  ◯ **SAME**

⊙ **OPPOSITE**

[OK]  [CANCEL]

# FIG.2B

**END?**

[YES]  [NO]

[OK]

# FIG.2C

PRINT DATA

FIG.3

FIG.4

**FIG.5**

# FIG.6

P2

↓

**S200**
PRINT DATA
DECODED

↓

**S210**
LINKED —NO→

YES ↓

**S240**
←NO— FIRST
DATA

YES ↓

**S215**
CONVERTED INTO
IMAGE DATA
AND OUTPUT

↓

**S280**
CONVERTED INTO
IMAGE DATA
AND OUTPUT

**S245**
CONVERTED INTO
IMAGE DATA
AND OUTPUT

**S220**
VIRGIN PAPER
SUPPLIED

↓

**S282**
PAPER SUPPLIED
FROM PAPER
TRANSFER
MECHANISM

**S250**
VIRGIN PAPER
SUPPLIED

**S225**
PRINTED

↓

**S284**
PRINTED

**S255**
PRINTED

**S227**
PAPER
DISCHARGED

↓

**S286**
PAPER
DISCHARGED

**S260**
PAPER
DISCHARGED

↓

**S265**
SAME
SIDE —NO→

**S270**
PAPER
REVERSED

YES ↓

**S275**
PAPER
TRANSFERRED

↓

( END )

NEW YEAR'S GREETINGS

M

あけまして
おめでとうございます!!

NAME AND ADDRESS
OF THE SENDER

〒000—0000　東京都
年賀状 太郎

**FIG.7A**

ZIP CODE

□□□—□□□□

N1,N2,···N50

ADDRESS

NAME

**FIG.7B**